Europäisches Patentamt

European Patent Office

Office européen des brevets

(19)

(11) Numéro de publication: **0 272 972**
**A2**

## (12) DEMANDE DE BREVET EUROPEEN

(21) Numéro de dépôt: 87402773.3

(22) Date de dépôt: 07.12.87

(51) Int. Cl.⁴: **F 16 B 13/04**

(30) Priorité: **16.12.86 FR 8617552**

(43) Date de publication de la demande:
**29.06.88 Bulletin 88/26**

(84) Etats contractants désignés:
**AT BE CH DE ES FR GB GR IT LI LU NL SE**

(71) Demandeur: **SOCIETE DE PROSPECTION ET
D'INVENTIONS TECHNIQUES SPIT
Route de Lyon B.P. 104
F-26501 Bourg-Les-Valence Cedex (FR)**

(72) Inventeur: **Ollivier, Jean
31 rue Georges Bonnet
F-26000 Valence (FR)**

**Barthomeuf, Jean-Paul
Alixan Le Village
F-26300 Bourg de Peage (FR)**

(74) Mandataire: **Bloch, Gérard et al
6, rue du Faubourg Saint-Honoré
F-75008 Paris (FR)**

(54) Cheville à ancrage par clou.

(57) La cheville comporte un corps cylindrique avec une tête (4) et une jambe d'appui (5). Le corps comporte une surface (8) parallèle à son axe pour le guidage d'un clou d'ancrage. La jambe (5) comporte une surface d'expansion (12), inclinée dans un sens sur l'axe du corps, et une surface (14) de maintien en pression du clou, rabattue dans l'autre sens vers l'axe du corps. La surface d'expansion (12) s'étend entre la surface de guidage (8) et la surface de maintien en pression (14).

La cheville, en cas de fissure limitée dans un matériau récepteur, reste maintenue en pression. Elle est bien adaptée à la fixation de pièces en plafond.

FIG.1

EP 0 272 972 A2

**Description**

Cheville à ancrage par clou.

La présente invention concerne une cheville à ancrage par clou, destinée à être introduite dans un trou ménagé dans un matériau récepteur, de forme générale cylindrique, qui comprend un corps, avec une tête et qui comporte une portion de surface de guidage du clou d'ancrage parallèle à l'axe de la cheville, et une jambe d'appui pour le clou, qui comporte une portion de surface d'expansion inclinée dans un sens sur l'axe de la cheville.

L'invention concerne, en général, une cheville pour maçonnerie et, notamment, une cheville pour la fixation de pièces en plafond.

Si une fissure limitée s'est formée dans une zone de réception de cheville, il est indispensable que la cheville reste suffisamment ancrée.

Les chevilles connues à ce jour n'apportent pas de solution pleinement satisfaisante à un tel problème, tant au plan technique qu'au plan économique considérés simultanément.

Le brevet européen 0 020 919 enseigne une cheville à ancrage par clou du type mentionnée ci-dessus. Outre le fait que la tête du corps y est formée par pliage de la jambe, la portion du clou s'étendant au-delà de la courbure, ou de la flexion, provoquée par la surface d'expansion inclinée de la jambe d'appui lors de l'enfoncement du clou, suit une trajectoire rectiligne le long de cette surface inclinée, ce qui n'est pas propice au maintien d'une pression élastique adéquate sur la paroi du trou récepteur quand, après formation d'une fissure, son ouverture s'est agrandie. Une telle cheville n'est pas assurée de rester ancrer dans une fissure.

La présente invention vise à pallier cet inconvénient.

A cet effet, la présente invention concerne une cheville du type mentionné ci-dessus, caractérisée par le fait que la portion de surface d'expansion de la jambe d'appui s'étend entre la portion de surface de guidage du corps et une autre portion de surface, sur la jambe d'appui, pour le maintien en pression du clou, rabattue dans l'autre sens vers l'axe de la cheville, pour permettre une double déformation élastique du clou.

Avec la cheville de l'invention, le clou, lors de son enfoncement, subit d'abord sur la surface d'expansion une première flexion dans un sens, vers la paroi du trou, puis, sur la paroi du trou récepteur dont la résistance est supérieure à la résistance à la flexion du clou, une deuxième flexion, dans l'autre sens, vers l'axe de la cheville, permise par la dépouille entre les deux surfaces adjacentes d'expansion et de maintien en pression. Grâce au deux déformations élastiques ainsi subies par le clou, l'angle de la deuxième dépendant de cette dépouille et de la résistance du matériau récepteur, en cas de fissure et donc d'élargissement du trou d'ancrage, le clou, sous l'action de cette force élastique, rattrape la paroi du trou ce qui maintient la cheville suffisament en pression dans le trou.

La demanderesse connaissait déjà le brevet amércain 4 116 105, qui décrit aussi une cheville à ancrage par clou. Cette cheville comporte un alésage, incliné sur l'axe de la cheville, pour la réception du clou, et le clou est agencé pour, lors de son enfoncement, fléchir au contact de la paroi du trou de réception et suivre ensuite la surface de joint entre le corps de la cheville et la paroi du trou. Certes, à la sortie de l'alésage, le clou subit une flexion. Mais, non seulement l'angle de flexion du clou ne dépend que des résistances du matériau récepteur et de celui du corps de la cheville, et, à cet égard, est difficilement maîtrisable, mais encore la flexion du clou s'accompagne d'une déformation de sa section.

Dans le forme de réalisation préférée de la cheville de l'invention de la présente demande, la dite autre portion de surface de maintien en pression, de la jambe d'appui, s'étend parallèlement à l'axe de la cheville, l'extrémité du clou a une forme d'ogive, et la portion de surface de guidage du clou, du corps, est formée par la paroi interne d'une portion de chemise cylindrique fendue agencée pour envelopper le clou.

L'invention sera mieux comprise à l'aide de la description suivante de plusieurs formes de réalisation de la cheville de l'invention, en référence aux dessins annexés, sur lesquels.

- la figure 1 représente une vue de côté d'une première forme de réalisation de la cheville de l'invention;
- la figure 2 représente une vue en bout de la cheville de la figure 1, du côté de sa tête;
- la figure 3 représente une vue en plan de la cheville de la figure 1;
- la figure 4 représente une vue du clou de la cheville de l'invention;
- la figure 5 représente une vue partiellement en coupe axiale de la cheville de la figure 1, en position enfoncée dans un trou récepteur;
- la figure 6 représente une vue partiellement en coupe axiale de la cheville de la figure 5, en position d'ancrage;
- la figure 7 représente une vue en plan d'une deuxième forme de réalisation de la cheville de l'invention, et
- la figure 8 représente une vue en plan d'une troisième forme de réalisation de la cheville de l'invention.

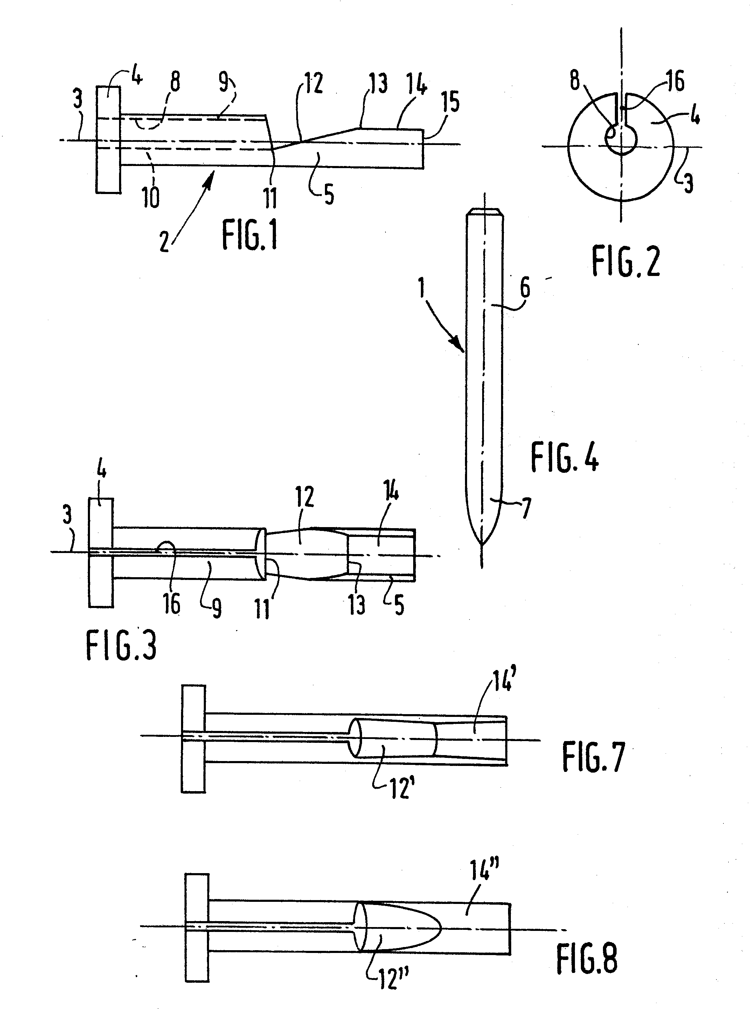

En référence aux figures 1 à 6, la cheville 2 à ancrage par clou, de l'invention, a une forme générale cylindrique d'axe 3, et comporte un corps 9, 10, avec une tête 4, et une jambe d'appui 5.

Le clou d'ancrage 1 est formé d'une tige cylindrique 6, sans tête, prolongée par une partie d'extrémité antérieure 7 en forme d'ogive.

Le corps est percé d'un alésage 8 de réception du clou 1, parallèle à l'axe 3 mais excentré par rapport à celui-ci, de diamètre correspondant à la section de la tige 6 du clou 1, et ménageant, autour du plan axial parallèle au plan de la figure 1, deux zones, l'une 9 de faible épaisseur, l'autre 10 de plus grande épaisseur. L'alésage 8 s'étend, depuis la tête 4, qu'il traverse, sur une portion de chemise cylindrique de guidage.

Depuis une ouverture opposée à la tête 4 de l'alésage 8, et plus précisément depuis unte arête 11 tangente à l'alésage 8 dans la zone 10 de plus grande épaisseur, la jambe d'appui a été usinée pour ménager d'une part, une surface plane d'expansion 12, entre l'arête 11 et une arête intermédiaire 13, inclinée sur l'axe 3 en direction du prolongement de la zone 9 de faible épaisseur, et d'autre part, une autre surface plane 14, entre l'arête 13 et l'extrémité 15 de la jambe d'appui. La surface 14 ne prolonge pas la surface 12, elle est rabattue dans la direction opposée, c'est-à-dire vers le prolongement de la zone 10 de plus grande épaisseur, en l'occurence, elle est parallèle à l'axe 3. Entre la tête 4 et l'arête 11, le corps est donc constitué d'une portion de chemise cylindrique avec un alésage excentré.

Enfin, pour compléter la description de la cheville des figures 1 à 6, le corps, dans sa zone 9 de faible épaisseur, comporte une fente latérale 16 qui, ici, s'étend parallèlement à l'axe 3 sensiblement dans le plan axial parallèle au plan de la figure 1. La fente 16 est prolongée dans la tête.

La longueur du clou 1 est suffisament grande pour que sa tige cylindrique 6 atteigne la surface 14.

La tête 4 sert à maintenir la pièce à fixer, dont il sera question plus loin, et à introduire le cou 1, la paroi de l'alésage 8, à guider le clou, la surface 12, à l'expansion de la cheville, et la surface 14, au maintien en pression du clou.

La description de la structure de la cheville ayant été faite, celle de son fonctionnement va pouvoir être abordée.

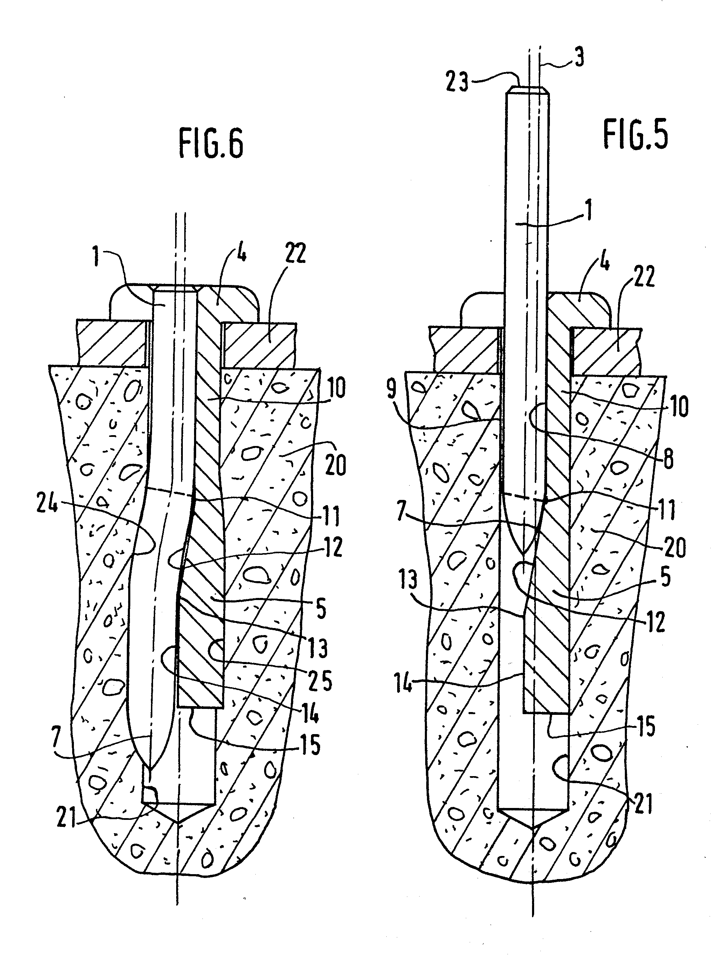

On fore, dans un matériau de construction 20, un trou 21 du diamètre de la cheville, suffisamment profond pour que le clou ne vienne pas buter contre son fond. On introduit mauellement, à travers une pièce à fixer 22, la cheville dans le trou 21 et, à l'aide d'un marteau, par exemple, on frappe sur l'extrémité 23 du clou opposée à son ogive 7. La résistance au déplacement dans le trou du corps de la cheville étant faible, le cou 1, par son ogive 7, coopère avec la surface d'expansion 12, lui servant d'abord de butée, pour entraîner le corps dans le trou jusqu'à ce que la tête 4 vienne plaquer la pièce 22 contre le matériau récepteur 20 (figure 5).

Continuant de frapper sur l'extrémité du clou, on force son passage entre la surface d'expansion 12 et la partie libre opposée de la surface du trou récepteur 21, ce qui provoque une flexion du clou depuis l'arête 11, en direction de cette partie de paroi, le clou venant dans une certaine mesure épouser la surface d'expansion 12. Cette flexion est du reste facilitée par la fente 16.

L'ogive 7 du clou étant conformée pour, d'une part, offrir un plan de tangence avec la jambe d'appui et, d'autre part, jouer un rôle de déflecteur sur la paroi du trou récepteur, à partir de l'instant où une certaine partie de cette ogive atteint la position d'appui entre l'arête 13 et la partie libre opposée de la surface du trou 21, et continuant de frapper sur le clou, et la résistance à la compression du matériau 20 par le clou 1 étant supérieure à la résistance à la flexion du clou 1, on provoque une duxième flexion du clou, depuis l'arête 13, et dans la direction opposée à celle de la première flexion, vers la jambe d'appui, le clou venant au fur et à mesure se rabattre vers la surface 14 de maintien en pression. C'est cette surface 14, ou, mieux, la dépouille entre les deux surfaces adjacentes 12, 14, qui permet cette deuxième flexion inverse (figure 6).

Dès que le clou franchit la zone de l'arête 11 de la jambe d'appui, il provoque la compression de la paroi du trou 21 aussi bien dans sa partie 24 opposée à la jambe de la cheville que dans sa partie 25 en contact avec la jambe d'appui 5, en élargissant donc un peu la section du trou, comme cela est visible sur la figure 6. C'est dans ces conditions qu'on parle donc de l'expansion de la cheville.

Lorsque l'extrémité 23 du clou 1 affleurs la surface frontale de la tête 4, l'ogive 7 du clou s'étend, ici, axialement au-delà de l'extrémité 15 de la jambe d'appui. L'ancrage de la cheville est alors achevé et l'opérateur, par un contrôle visuel, peut ainsi s'en rendre compte.

En cas de traction sur le corps de la cheville, par sa tête 4, le clou 1 reste en place dans le matériau récepteur, ses deux flexions s'opposant à son glissement dans la cheville qui, à cet égard, peut être qualifiée d'auto-bloquante.

Grâce aux deux flexions, ou déformations, élastiques subies par le clou, en cas de fissure limitée, le clou, sous l'action de cette force élastique, rattrape la paroi du trou pour maintenir la cheville dedans, avec une certaine pression.

On notera que la surface 14 de maintien en pression du clou n'a pas à être nécessairement parallèle à l'axe 3. Il suffit qu'une dèpouille soit ménagée entre les deux surfaces adjacentes 12, 14.

La tige cylindrique 6 du clou 1 pourrait être prolongée par une pyramide, un cône ou encore être tronquée obliquement.

La variante de réalisation de la figure 7 est identique à la forme de réalisation des figures 1 à 6, à l'exception du fait que la surface d'expansion 12′ et la surface 14′ de maintien en pression du clou, au lieu d'être planes, sont des surfaces courbes concaves.

Les autres éléments de la cheville sont les mêmes et n'ont donc pas été référencés.

La variante de réalisation de la figure 8 est identique aux deux autres, à l'exception du fait que la surface d'expansion 12″ est une surface courbe concave et la surface 14″ de maintien en pression est plane.

A titre purement indicatif et non limitatif de la portée du brevet, la cheville de l'invention peut être en acier, aluminium, laiton ou en matière plastique, et le clou d'ancrage, de toutes façons en matériau rigide, résistant et élastique, par exemle en acier traité ou tout autre matériau équivalent.

### Revendications

1. Cheville à ancrage par clou, destinée à être introduite dans un trou (21) ménagé dans un matériau récepeur (20), de forme générale cylindrique, qui comprend un corps (9, 10), avec une tête (4) et qui comporte une portion de surface (8) de guidage du clou d'ancrage parallèle à l'axe (3) de la cheville, et une jambe (5) d'appui pour le clou (1), qui comporte une portion de surface d'expansion (12; 12'; 12") inclinée dans un sens sur l'axe (3) de la cheville, caractérisée par le fait que la portion de surface d'expansion (12; 12'; 12") de la jambe d'appui (5) s'étend entre la portion de surface de guidage (8) du corps et une autre portion de surface (14; 14'; 14"), sur la jambe d'appui (5), pour le maintien en pression du clou, rabattue dans l'autre sens vers l'axe (3) de la cheville, pour permettre une double déformation élastique du clou (1).

2. Cheville à ancrage par clou selon la revendication 1, dans laquelle la portion de surface de guidage est formée par la paroi d'un alésage (8) d'une portion de chemise cylindrique (9, 10), traversant le tête (4).

3. Cheville à ancrage par clou selon la revendication 2, dans laquelle l'alésage (8) est excentré par rapport à l'axe (3) de la cheville.

4. Cheville à ancrage par clou selon l'une des revendications 2 et 3, dans laquelle, dans la portion de chemise cylindrique de guidage (9, 10), est ménagée une fente latérale (16).

5. Cheville à ancrage par clou selon la revendication 4, dans laquelle le fente (16) se prolongs dans la tête (4).

6. Cheville à ancrage par clou selon l'une des revendications 1 à 5, dans laquelle la surface d'expansion (12) est plane.

7. Cheville à ancrage par clou selon l'une des revendicationa 1 à 5, dans laquelle la surface d'expansion (12'; 12") est une surface courbe.

8. Cheville à ancrage par clou selon l'une des revendications 1 à 7, dans laquelle la surface de maintien en pression (14; 14") est plane.

9. Cheville à ancrage par clou selon l'une des revendications 1 à 7, dans laquelle la surface de maintien en pression (14') est une surface courbe.

10. Cheville à ancrage par clou selon l'une des revendications 1 à 9, dans laquelle la surface de maintien en pression (14; 14'; 14") s'étend parallèlement à l'axe (3) de la cheville.

11. Cheville à ancrage par clou selon l'une des revendications 1 à 10, dans laquelle le clou (1) comporte une tige cylindrique (6) prolongée par une partie (7) en forme d'ogive.

0272972

FIG.1

FIG.2

FIG.4

FIG.3

FIG.7

FIG.8

FIG.6

FIG.5